# EUROPEAN PATENT APPLICATION

(11) **EP 2 584 668 A1**
(43) Date of publication of application: **24.04.2013**
(21) Application number: 12187729.4
(22) Date of filing: 09.10.2012
(51) Int. Cl.: H02J 7/35, H02J 3/38, H01L 31/042, H02M 3/158

(54) **System and method for operating a power conversion system in a curtailed mode**

(30) Priority: 17.10.2011 US 201113274793
(71) Applicant: General Electric Company, Schenectady, NY 12345 (US)
(72) Inventor: O'Brien, Kathleen Ann, Niskayuna, NY New York 12309 (US); Schelenz, Owen Jannis, Niskayuna, NY New York 12309 (US)
(74) Representative: Picker, Madeline Margaret

(57) **Abstract**

A power management system (12) comprising a processor is provided. The power management system (12) obtains maximum operating capacities of the power converters (16) over time while in the curtailed mode and uses at least some of the maximum operating capacities for determining and commanding an adjusted operating capacity of at least one of the power converters (16) to maintain a substantially constant level of output power.

## Description

### BACKGROUND

The invention relates to a system and method for operating a power conversion system in a curtailed mode.

With the rising cost and scarcity of conventional energy sources and concerns about the environment, there is a significant interest in alternative energy sources such as solar power and wind power. Solar power generation uses photovoltaic sources to generate electricity from the sun. Multiple photovoltaic sources are electrically coupled to one another in such systems to generate electricity. The amount of electricity generated by the photovoltaic sources depends on insolation due to the sun. The insolation is dynamic in nature and changes frequently. For example, insolation is lower under cloudy conditions than under clear sky conditions.

Large solar power plants are spread over a great distance, and the insolation may not be same at all the locations of a large solar power plant. For example, when a cloud passes over a portion of a large solar power plant, the insolation at the remaining portion of the solar power plant differs from the insolation at the portion affected by the cloud. The difference in insolation between the different parts of the solar power plant results in undesirable fluctuations in the power provided to the power grid. These power fluctuations may lead to increased equipment wear and maintenance costs for the power plant and to undesirable power fluctuations on the grid.

Hence, there is a need for an improved system to address the aforementioned issues.

### BRIEF DESCRIPTION

In one embodiment, a method for operating power converters of a power conversion system in a curtailed mode is provided. The method includes obtaining maximum operating capacities of the power converters over time while in the curtailed mode. The method also includes using at least some of the maximum operating capacities for determining and commanding an adjusted operating capacity of at least one of the power converters to maintain a substantially constant level of output power.

In another embodiment, a power management system comprising a processor is provided. The system is configured to obtain maximum operating capacities of the power converters over time while in a curtailed mode and using at least some of the maximum operating capacities for determining and commanding an adjusted operating capacity of at least one of the power converters to maintain a substantially constant level of output power.

In yet another embodiment, a solar power conversion system is provided. The system includes a plurality of photovoltaic modules for generating DC power. The system also includes a plurality of power converters for converting the DC power to AC power. The system further includes a power management system for operating the power converters in a curtailed mode. The power management system obtains a first set of maximum operating capacities of a first set of power converters while ramping up the operating capacities of the first set of power converters and obtains a second set of maximum operating capacities of a second set of power converters while ramping up the operating capacities of the second set of power converters and simultaneously ramping back the operating capacities of the first set of power converters. The power management system further adjusts an operating capacity of at least one power converter to maintain a substantially constant level of output power during insolation modifications.

### DRAWINGS

These and other features, aspects, and advantages of the present invention will become better understood when the following detailed description is read with reference to the accompanying drawings in which like characters represent like parts throughout the drawings, wherein:
FIG. 1 is a block diagram representation of a solar power conversion system including a power management system in accordance with an embodiment of the invention.
FIG. 2 is a schematic representation of a plurality of power converters operating in a curtailed mode coupled to a power management system that obtains operating capacities of the plurality of power converters and maintains a substantially constant level of output power during insolation modifications in accordance with an embodiment of the invention.

### DETAILED DESCRIPTION

Embodiments of the present invention include a power management system and method that provides a substantially constant level of output power in a power conversion system. The power management system comprises a processor for obtaining maximum operating capacities of the power converters over time while in a curtailed mode and using at least some of the maximum operating capacities for determining and commanding an adjusted operating capacity of at least one of the power converters to maintain the substantially constant level of output power. As it is computationally complex to obtain all the maximum operating capacities simultaneously, in a more specific embodiment, sets of maximum operating capacities are obtained sequentially. For increased accuracy, the adjustment or adjustments can be made on the power converters that were most recently evaluated.

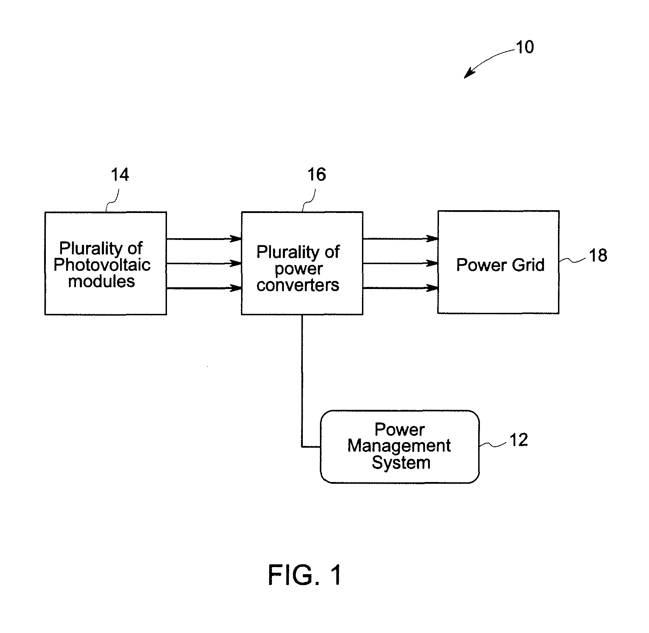

FIG. 1 is a block diagram representation of a solar power conversion system 10 including a power management system 12 in accordance with an embodiment of the invention. The solar power conversion system 10 includes a plurality of photovoltaic modules 14 that generate DC power from solar energy. The photovoltaic modules 14 are electrically coupled to a plurality of power converters 16 that receive the DC power from the plurality of photovoltaic modules 14 and convert the DC power to AC power. Power converters 16 may comprise single stage DC to AC converters or dual stage converters comprising a DC to DC converter coupled to a DC to AC converter at a DC link. The AC power is transferred to a power grid 18 for utilization.

In some circumstances, a power curtailment command may be issued such that the power management system 12 will need to operate within a curtailed mode. The power generated from the photovoltaic modules 14 is variable due to changes in insolation. It is desirable to provide as much power as allowed in the curtailed mode regardless of whether a particular module may be shaded or obstructed. The power management system 12 maintains a substantially constant level of output power by continuously assessing the operating capacities of the power converters 16 that are coupled to the photovoltaic modules 14 and making any necessary adjustments.

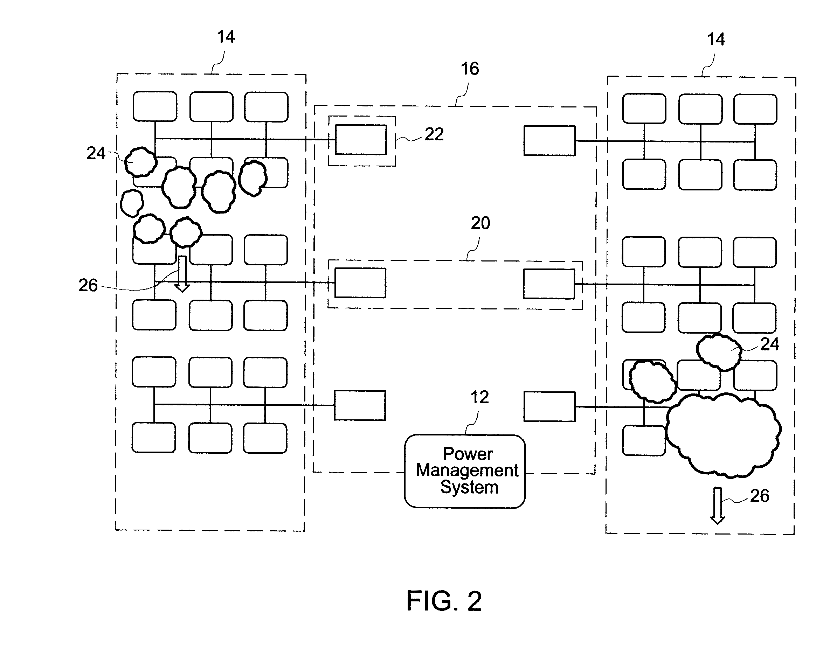

As shown in FIG. 2, the power management system 12 obtains the maximum operating capacities of the power converters 16 by splitting the plurality of power converters 16 in multiple sets of power converters. In one embodiment, each set of the power converters includes at least one power converter. The splitting may be done in a predetermined or random manner, and the sets need not be exclusive (that is, a converter may be within more than one set if desired). The power management system 12 obtains operating capacity information of a first set 20 of the power converters while ramping up the operating capacities of the power converters to the maximum operating capacity of the power converters. Within a set, the ramping of the power converters may be done either simultaneously or sequentially.

The various sets of power converters are evaluated such that each of the power converters is evaluated over time. Continuing the above example, after obtaining maximum operating capacities of the first set of power converters 20 a second set 22 is evaluated. In one embodiment wherein simultaneous ramping is performed within each set, when the new set is being ramped up, the prior set is being simultaneously ramped back. More specifically, when the second set is ramped up, the first set is accordingly ramped back to maintain a constant level of power in the power conversion system. The power management system 12 repeatedly obtains the maximum operating capacities of the plurality of power converters 16 over time and updates a power table that includes the most recent maximum operating capacities of each of the power converters 16.

In situations of a partially cloudy day (represented by clouds 24), for example, the insolation on some part of the photovoltaic modules 14 that are blocked by clouds 24 is reduced in a manner that affects the output power of the power converters that are coupled to those affected photovoltaic modules in the power conversion system 10.

When the power management system 12 senses that a particular set of converters are providing less output power, for example, the power management system 12 may use this information to accept more output power from one or more other converters that are not affected by the blockage. When doing so, it is more effective to use one or more recently evaluated converters so as to increase the likelihood that operating capacity has not changed significantly. As the cloud passes and the originally blocked modules are able to provide more power through their respective power converters, the power management system 12 may then readjust (decrease) the operating capacity of the one or more other converters to maintain a substantially constant output power.

In another embodiment, the power management system 12 anticipates a direction 26 in which the intermittent cloud is traveling and uses this information when determining the order of evaluation of the sets of the power converters and the adjustment of power converter operating capacities. For example, consider a case in which the power conversion system 10 is operating at a fifty percent curtailed capacity. The power converters 16 in such a case will be operating at fifty percent of their original operating capacity. Assuming that the power conversion system 10 includes twenty power converters 16 and twenty photovoltaic modules 14, wherein each photovoltaic module 14 is connected to a power converter 16, if there is an intermittent cloud cover 24 on four photovoltaic modules, the power converters coupled to the respective photovoltaic modules would generate less power than the required power to be generated at fifty percent curtailment. For example, if the intermittent cloud cover affects the operating capacity of the four affected power converters by ten percent then the output power of the power conversion system is reduced by one percent. In order to overcome the shortfall of one percent power, the power management system 12 adjusts the operating capacities of the power converters that are not affected by the cloud cover as the power converters have available operating capacities due to curtailed operations of the power converters that can be increased to maintain a constant power output.

Once the cloud passes by, the affected power converters are able to deliver the power required under curtailed mode and the power management system 12 reduces the operating capacities of the unaffected power converters to maintain a constant power level. In one embodiment, additional irradiation sensors (not shown) can be installed around the periphery of the power conversion system 10 to anticipate clouds entering and leaving the power conversion system 10. The power management system 12 receives the information from the irradiation sensors and computes a direction in which the cloud may travel. Continuing with the aforementioned example, the power management system 12 predetermines the power converters that may be affected by the cloud cover and starts adjusting the operating capacities of the power converters gradually to avoid any sudden changes in the output power, resulting in more constant output power at the power grid 18.

The various embodiments of the power conversion system include a power management system that is able to operate in a curtailed mode while maintaining a substantially constant level of output power in the power conversion system during partially cloudy day. This results in less maintenance and better efficiency of the power conversion system.

It is to be understood that a skilled artisan will recognize the interchangeability of various features from different embodiments and that the various features described, as well as other known equivalents for each feature, may be mixed and matched by one of ordinary skill in this art to construct additional systems and techniques in accordance with principles of this disclosure. It is, therefore, to be understood that the appended claims are intended to cover all such modifications and changes as fall within the true spirit of the invention. Additionally, although a particularly useful application of the invention is in the solar power generation context, the concept is additionally useful in other applications where curtailed modes may be required. Several non-limiting other applications include wind power and hydrokinetic power.

While only certain features of the invention have been illustrated and described herein, many modifications and changes will occur to those skilled in the art. It is, therefore, to be understood that the appended claims are intended to cover all such modifications and changes as fall within the scope of the invention as defined therein.

## Claims

1. A power management system (12) comprises a processor for obtaining maximum operating capacities of power converters (16) over time while in a curtailed mode and using at least some of the maximum operating capacities for determining and commanding an adjusted operating capacity of at least one of the power converters (16) to maintain a substantially constant level of output power.

2. The system (12) of claim 1, wherein the power management system (12) identifies sets of the power converters (16) from which to sequentially obtain maximum operating capacities.

3. The system (12) of claim 2, wherein the power management system (12) identifies the sets in a sequence wherein the operating capacity of each of the power converters (16) in one set is obtained prior to the operating capacity of a power converter in another set being obtained.

4. The system (12) of claim 2 or claim 3, wherein the power management system (12) includes controls for ramping up the operating capacities of the power converters (16) of a first identified set to a maximum threshold operating capacity, and preferably for ramping back the operating capacity of the first identified set of the power converts (16) while ramping up the operating capacities of a second identified set.

5. The system (12) of claim 2, 3 or 3, wherein the power management system (12) determines and commands the adjusted operating capacity of at least one of the power converters (16) from a most recently identified set.

6. The system of any preceding claim, wherein the power management system (12) is configured for determining and commanding the adjusted operating capacity of the at least one of the power converters (16) by increasing or decreasing the operating capacity of the at least one of the power converters (16).

7. The system (12) of any preceding claim, wherein the power management system (12) is configured for receiving insolation information from photovoltaic modules (14) coupled to the power converters (16) and anticipating modifications in the insolation at the photovoltaic modules (14) for determining and commanding the adjusted operating capacity of the at least one of the power converters (16).

8. The system of any preceding claim, wherein the power management system (12) comprises a power table comprising the obtained operating capacities of each of the power converters (16) updated over time.

9. A method for operating power converters (16) of a power conversion system in a curtailed mode comprising:
obtaining maximum operating capacities of the power converters (16) over time while in the curtailed mode; and
using at least some of the maximum operating capacities for determining and commanding an adjusted the operating capacity of at least one of the power converters (16) to maintain a substantially constant level of output power.

10. The method of claim 9, wherein obtaining the maximum operating capacities comprises obtaining maximum operating capacities of power converters (16) within sets of the power converters (16).

11. The method of claim 9 or claim 10, wherein determining and commanding the adjusted operating capacity of the at least one of the power converters (16) comprises receiving insolation information regarding photovoltaic modules (14) coupled to the power converters (16) and anticipating modifications in the insolation at the photovoltaic modules (14).

12. The method of claim 11, wherein determining and commanding the adjusted operating capacity of the at least one of the power converters (16) comprises adjusting the operating capacity of at least one power converter from a most recently identified set.

13. The method of claim 9, 10, 11 or 12, wherein obtaining the maximum operating capacities comprises ramping up operating capacities of the identified sets of the power converters (16) to a maximum threshold operating capacity, and preferably further comprising ramping back the operating capacities of a first identified set of power converters (16) and ramping up the operating capacities of a second identified set.

14. The method of any one of claims 9 to 13, wherein:
determining and commanding the adjusted operating capacity of the at least one of the power converters (16) comprises increasing or decreasing the operating capacity of the at least one of the power converters (16); and/or
determining and commanding the adjusted operating capacity of the at least one of the power converters (16) comprises receiving insolation information regarding photovoltaic modules coupled to the power converters (16) and anticipating modifications in the insolation at the photovoltaic modules (14); and/or
further comprising updating a power table with the obtained operating capacities over time.

15. A solar power conversion system (10) comprising:
a plurality of photovoltaic modules (14) for generating DC power;
a plurality of power converters (16) for converting the DC power to AC power; and
a power management system (12) for:
operating the power converters (16) in a curtailed mode;
obtaining a first set (20) of maximum operating capacities of a first set (20) of power converters (16) while ramping up the operating capacities of the first set (20) of power converters (16);
obtaining a second set (22) of maximum operating capacities of a second set (22) of power converters (16) while ramping up the operating capacities of the second set (22) of power converters (16) and simultaneously ramping back the operating capacities of the first set (20) of power converters (16); and
adjusting an operating capacity of at least one power converter to maintain a substantially constant level of output power during insolation modifications.
